# EUROPEAN PATENT APPLICATION

(11) **EP 3 299 859 A1**
(43) Date of publication of application: **28.03.2018**
(21) Application number: 16189835.8
(22) Date of filing: 21.09.2016
(51) Int. Cl.: G02B 7/08

(54) **A PAN-TILT-ZOOM CRADLE FOR A CAMERA**

(71) Applicant: Playgineering, SIA, 1004 Riga (LV)
(72) Inventor: Fomrats, Ricards, LV-2164 Alderi, Adazu novads (LV); Kurakins, Viktors, LV-1019 Riga (LV); Klapers, Miks, LV-1064 Riga (LV); Kromanis, Artis, LV-4201 Valmiera (LV); Celmins, Atis, LV-3801 Saldus (LV)
(74) Representative: Fortuna, Jevgenijs

(57) **Abstract**

The invention relates to a camera driving apparatus and holders, in particular, to pan-tilt-zoom device for a camera capable of inclining and rotating camera, as well as change camera's lens elements focal length and angle of view. The pan-tilt-zoom device for a camera, comprising: a tilt portion having a camera supporting means, a pan portion comprising a tilt drive motor; and a base portion comprising a pan drive motor; the pan portion is supported by the base portion and is rotatable around a vertical axis with respect to and above the base portion; the tilt portion is supported by the pan portion and is rotatable around a horizontal axis with respect to the pan portion; wherein the camera supporting means further comprises a camera zoom drive motor; whereby the camera supporting means is pointable by operation of the tilt drive motor and the pan drive motor; whereby camera supporting means further comprises camera zoom adjusting means operably connected with camera zoom drive motor; and whereby camera zoom is adjustable by operation of the camera zoom drive motor. The camera supporting means may further comprise a camera focal length adjusting means. The position of the camera zoom adjusting means and the camera focal length adjusting means according to the preferred embodiment is adjustable.

## Description

### Technical field

The present invention relates to a camera driving apparatus and holders, in particular, to pan-tilt-zoom device for a camera capable of inclining and rotating camera, as well as change camera's lens elements focal length and angle of view.

### Background art

There are known different pan-tilt-zoom (PTZ) cameras and camera driving devices allowing inclining and rotating camera (US2015/0312468, EP1760387B1, US5850579A, KR20130117970A, JPH08210590A).

US9179067 discloses a camera driving apparatus, comprising a camera section, a movable unit having the camera section built therein, having an attracting magnet therein, and having a convex partial spherical surface along an outer surface thereof; a fixed unit having a magnetic member therein and having a recess loosely fitted with the movable unit. The movable unit is freely rotatable around a sphere center of the first convex partial spherical surface; a panning driving section; a tilting driving section; a rolling driving section; a first detector for detecting a tilt angle of the camera section in the panning and tilting directions with respect to the fixed unit;; and a second detector for detecting a rotation angle of the camera section in the rolling direction.

KR20130117970 discloses a pan-tilt-zoom driving system for a large sized monitoring camera. The device comprises a differential gear module for CCTV drives a PTZ camera supporting unit in a pan mode and a tile mode with a rotary direction and speed difference between a left side driving motor and a right side driving motor. A twin motor unit is equipped with the left side driving motor and the right side driving motor. The twin motor unit is positioned in one side of the differential gear module for CCTV. A twin motor controller synchronizes the two motors.

The disadvantages of the known devices are impossibility to control both pan, zoom and tilt of different types and sizes of cameras with different types and sizes of lenses on the same device. All the solutions are limited on exact size of cameras and lenses and/or limited with only pan and tilt function without zoom. Technically closest prior art solutions do not provide possibility of their use in fully automated management without human interaction.

### Disclosure of the invention

The aim of the invention is to provide universal pan-tilt-zoom device, which can be used for different cameras and eliminate drawbacks of the prior art.

The aim is achieved by providing a pan-tilt-zoom device for a camera, comprising: a tilt portion having a camera supporting means, a pan portion comprising a tilt drive motor; and a base portion comprising a pan drive motor; the pan portion is supported by the base portion and is rotatable around a vertical axis with respect to and above the base portion; the tilt portion is supported by the pan portion and is rotatable around a horizontal axis with respect to the pan portion; wherein the camera supporting means further comprises a camera zoom drive motor; whereby the camera supporting means is pointable by operation of the tilt drive motor and the pan drive motor; whereby camera supporting means further comprises camera zoom adjusting means operably connected with camera zoom drive motor; and whereby camera zoom is adjustable by operation of the camera zoom drive motor. The camera supporting means may further comprise a camera focal length adjusting means. The position of the camera zoom adjusting means and the camera focal length adjusting means according to the preferred embodiment is adjustable.

### Brief description of drawings

Fig. 1 shows one embodiment of the pan-tilt-zoom device for a camera;
Fig. 2 shows two perpendicularly connected rods of the pan portion, provided with a number of seats allowing to accommodate and fix the respective elements of the pan-tilt-zoom device;

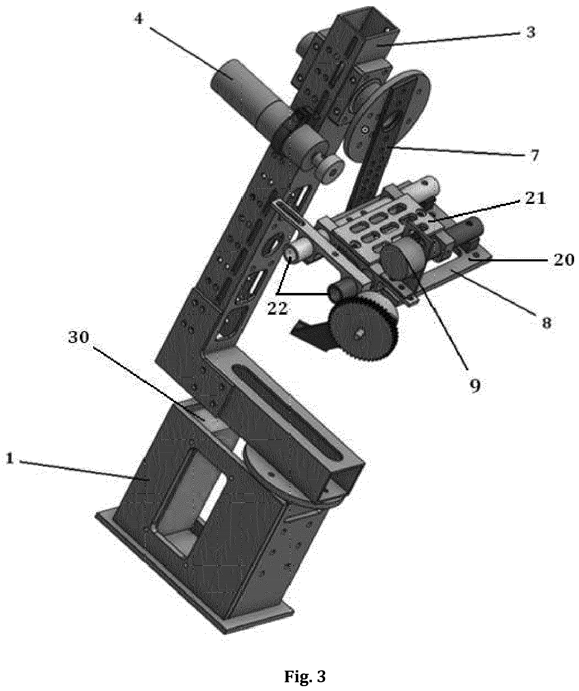

Fig. 3 - shows another embodiment of the pan-tilt-zoom device for a camera (not fully assembled).

The base portion 1 comprising a pan drive motor 2. The base portion 1 is adapted to be fixed to the wall, ceiling, floor or any pedestal or rack. The base portion 1 may be provided with a number of seats or other means allowing fixing the pan drive motor 2 at different height positions. The base portion 1 may also comprise a controller 30.

The pan portion 3 is supported by the base portion 1 and is rotatable around a vertical axis with respect to and above the base portion 1. The pan portion 3 comprises a tilt drive motor 4. The pan portion 3 preferably comprises a L-shaped profile (e.g. a rectangular pipe) or two perpendicularly connected rods 3', 3"; however other shapes are also possible, e.g. T, I, U-shapes. The pan portion 3 may comprise one or more stiffening ribs 5.

The vertical and horizontal parts of the pan portion 3 may be provided with a number of seats 6 allowing to accommodate and fix the respective elements of the pan-tilt-zoom device (such as the tilt portion's axis, motors, etc.) and to adjust height or width of the pan-tilt-zoom device, thereby adjusting location of gravity centre.

The tilt portion 7 is supported by the pan portion 3 and is rotatable around a horizontal axis with respect to the pan portion 3. The tilt portion 7 comprises the camera supporting means 8.

The tilt portion 7 may be provided with a number of seats or other means allowing fixing the camera supporting means 8 at different height positions.

The camera supporting means 8 may be a platform fixed to the tilt portion 7. According to one embodiment the camera supporting means 8 comprises a platform one 20, a platform two 21, two guides 22 (e.g. guiding pipes) releasably fixed to the platform one 20 and adapted to support the platform two 21. The platform one 20 is provided with a number of alternative seats or apertures adapted for fixing the guides 22 to the platform one 20, thereby allowing adjusting distance between the guides 22. The guides 22 are provided with a number of alternative means (e.g. seats or apertures) adapted for fixing the platform two 21, thereby allowing adjusting the position of the platform two 21 in respect of longitudinal axes of the guides 22. The platform two 21 is provided with means, such as seats or apertures adapted for fixing a camera on the platform two 21, where the platform two 21 is provided with a number of the alternative seats or apertures allowing adjusting camera's position in respect of longitudinal axis of the platform two 21.

According to one embodiment of the invention rotation axis of the tilt portion 7 and rotation axis of the pan portion 3 are hollow pipes each fixed in two bearings, allowing to pass electric cables through said pipes.

The camera supporting means 8 is pointable by operation of the tilt drive motor 4 and the pan drive motor 2 (e.g. DC motors with position encoder ensuring rotation speed at least 30°/s). The camera supporting means 8 further comprises camera zoom drive motor 9 (e.g. a step motor) and camera zoom adjusting means 10 operably connected with camera zoom drive motor 9. Camera zoom is adjustable by operation of the camera zoom drive motor 9. The camera zoom adjusting means 10 preferably comprises a rotatable wheel one 11 adjustably fixed to the camera supporting means 8, such to allow the wheel's one 11 engagement with camera's zoom ring and controllable rotation of the wheel one 11, thereby adjustment of camera's zoom.

The camera supporting means 8 further may comprise a camera focal length adjusting means 12 and a camera focal length adjusting means' drive motor 13 (e.g. a step motor) operably connected with the camera focal length adjusting means 12. Camera focal length is adjustable by operation of the camera's focal length adjusting means' drive motor 13. The camera focal length adjusting means 12 preferably comprises a rotatable wheel two 14 adjustably fixed to the camera supporting means 8, such to allow the wheel's two 14 engagement with camera's focus ring and controllable rotation of the wheel two 14, thereby adjustment of camera's focal length.

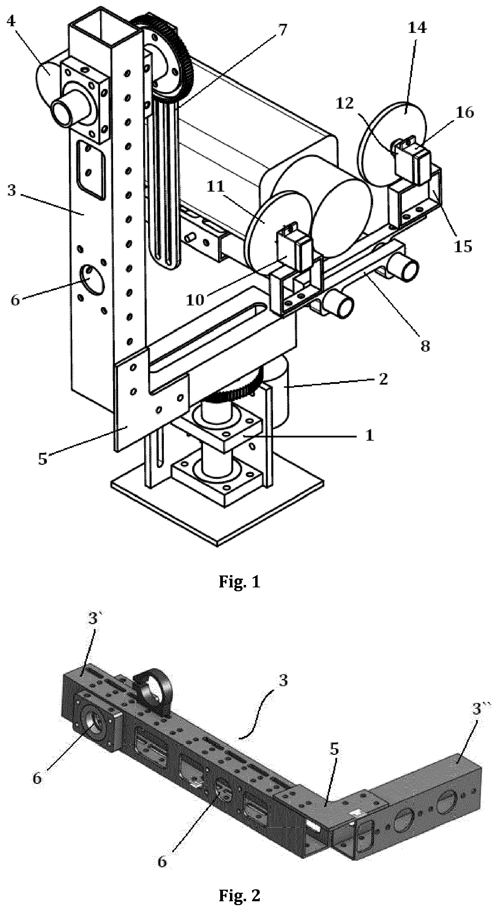

The camera zoom adjusting means 10 and camera focal length adjusting means 12 may be releasably mounted on rails 15 or similar means (e.g. rectangular pipe as on Fig. 1), which are mounted on the camera supporting means 8, ensuring controllable displacement of the camera zoom adjusting means 10 and camera focal length adjusting means 12 with respect to the longitudinal axis of the camera. In addition the camera zoom adjusting means 10 and camera focal length adjusting means 12, each may be releasably mounted on adapter 16 (on the camera supporting means), ensuring their controllable displacement relative to the transverse axis of the camera. This allows using the proposed pan-tilt-zoom device with different size cameras.

## Claims

1. A pan-tilt-zoom device for a camera, comprising: a tilt portion (7) having a camera supporting means (8), a pan portion (3) comprising a tilt drive motor (4); and a base portion (1) comprising a pan drive motor (2); the pan portion (3) is supported by the base portion (1) and is rotatable around a vertical axis with respect to and above the base portion (1); the tilt portion (7) is supported by the pan portion (3) and is rotatable around a horizontal axis with respect to the pan portion (3); **wherein** the camera supporting means (8) further comprises a camera zoom drive motor (9); whereby the camera supporting means (8) is pointable by operation of the tilt drive motor (4) and the pan drive motor (2); whereby camera supporting means (8) further comprises a camera zoom adjusting means (10) operably connected with camera zoom drive motor (9); and whereby camera zoom is adjustable by operation of the camera zoom drive motor (9).

2. The device according to claim 1, **wherein** the camera supporting means (8) further comprises a camera focal length adjusting means (12) and a camera focal length adjusting means' drive motor (13) operably connected with the camera focal length adjusting means (12), whereby camera focal length is adjustable by operation of the camera's focal length adjusting means' drive motor (13).

3. The device according to claim 1, **wherein** the tilt portion (7) is provided with a number of seats allowing fixing the camera supporting means (8) at different height positions.

4. The device according to claim 1, **wherein** the pan portion (3) comprises a L-shaped profile or two perpendicularly connected rods (3' and 3"), optionally with one or more stiffening ribs (5).

5. The device according to claim 1, **wherein** vertical and horizontal parts of the pan portion (3) are provided with a number of seats (6) allowing to accommodate and fix the respective elements of the pan-tilt-zoom device and to adjust height or width of the pan-tilt-zoom device.

6. The device according to claim 1, **wherein** the base portion (1) is provided with a number of seats allowing fixing the pan drive motor (2) at different height positions.

7. The device according to claim 1, **wherein** the camera supporting means (8) further comprises a platform one (20), a platform two (21), two guides (22) releasably fixed to the platform one (20) and adapted to support the platform two (21).

8. The device according to claim 1, **wherein** the camera zoom adjusting means (10) comprises a rotatable wheel one (11) adjustably fixed to the camera supporting means (8), such to allow the wheel's one (11) engagement with camera's zoom ring and controllable rotation of the wheel one (11), thereby adjustment of camera's zoom.

9. The device according to claim 2, **wherein** the camera focal length adjusting means (12) comprises a rotatable wheel two (14) adjustably fixed to the camera supporting means (8), such to allow the wheel's two (14) engagement with camera's focus ring and controllable rotation of the wheel two (14), thereby adjustment of camera's focal length.

10. The device according to claim 8 or 9, **wherein** the camera zoom adjusting means (10) and the camera focal length adjusting means (12) are releasably mounted on rails (15) or similar means, which are mounted on the camera supporting means (8), ensuring their controllable displacement with respect to the longitudinal axis of a camera.

11. The device according to claim 8 or 9, **wherein** the camera zoom adjusting means (10) and the camera focal length adjusting means (12) are releasably mounted on rails (15) or similar means, which are mounted on the camera supporting means (8), ensuring their controllable displacement relative to the transverse axis of the camera.

12. The device according to claim 1, **wherein** rotation axis of the tilt portion (7) and rotation axis of the pan portion (3) are hollow pipes allowing passing electric cables through said pipes.
